# EUROPÄISCHE PATENTSCHRIFT

(11) **EP 3 673 525 B1**
(45) Veröffentlichungstag und Bekanntmachung des Hinweises auf die Patenterteilung: **26.04.2023**
(21) Anmeldenummer: 18756154.3
(22) Anmeldetag: 25.07.2018
(51) Int. Cl.: H01M 10/613, H01M 10/655, F16B 11/00

(54) **SYSTEM ZUM BEFESTIGEN VON KÜHLELEMENTEN**
SYSTEM FOR FASTENING COOLING ELEMENTS
SYSTÈME DE FIXATION D'ÉLÉMENTS DE REFROIDISSEMENT

(30) Priorität: 25.08.2017 DE 102017214881
(43) Veröffentlichungstag der Anmeldung: 01.07.2020
(73) Patentinhaber: Audi AG, 85045 Ingolstadt (DE); G.H. Induction Deutschland Induktions-Erwärmungs-Anlagen GmbH, 69434 Hirschhorn (DE)
(72) Erfinder: ANDREAS, Kugler, 86643 Rennertshofen (DE); FRÜHTRUNK, Jürgen, 85107 Baar-Ebenhausen (DE); BALSS, Andreas, 64668 Rimbach (DE); SCHÖLCH, Frank, 69434 Hirschhorn (DE)
(74) Vertreter: RDL Patentanwälte PartG mbB
(86) Internationale Anmeldenummer: PCT/EP2018/070107
(87) Internationale Veröffentlichungsnummer: WO 2019/038005

(56) Entgegenhaltungen:
- GB-A- 2 387 019
- US-A1- 2010 248 029
- US-A1- 2015 214 531

## Beschreibung

Die Erfindung betrifft ein System zum Befestigen von Kühlelementen auf einem Bauteil und ein Verfahren zum Befestigen von Kühlelementen auf einem Bauteil.

Ein Fahrzeug kann eine Batterie aufweisen, in der elektrische Energie zum Antreiben des Fahrzeugs gespeichert wird. Dabei ist es erforderlich, die Batterie durch ein geeignetes Kühlsystem zu kühlen, das jedoch an der Batterie zu befestigen ist.

Ein Batteriesystem mit einem thermisch leitfähigen Batteriegehäuse und einem Wärmeabfuhrsystem sind aus der Druckschrift DE 10 2014 004 742 A1 bekannt. Dabei ist das Wärmeabfuhrsystem mit dem Batteriegehäuse verklebt.

Ein Batteriekühlsystem, das aus der Druckschrift DE 10 2014 204 263 A1 bekannt ist, umfasst eine Kühlplatte, die aus mehreren miteinander verklebten Kunststoff-Teilen besteht.

Eine in der Druckschrift DE 20 2012 101 076 U1 beschriebene Vorrichtung zum Kühlen einer Batterie umfasst eine Kühlplatte, mit der Wärmeübertragungsmittel verklebt sind.

Weiterer Stand der Technik ist aus den Druckschriften US 2010/248029 A1, US 2015/214531 A1 und GB 2 387 019 A bekannt.

Vor diesem Hintergrund war es eine Aufgabe, ein Gehäuse einer Batterie mit Kühlelementen zu versehen.

Diese Aufgabe wird mit einem System und einem Verfahren mit den Merkmalen der unabhängigen Patentansprüche gelöst. Ausführungsformen des Systems und des Verfahrens gehen aus den abhängigen Patentansprüchen und der Beschreibung hervor.

Das erfindungsgemäße System ist zum Befestigen von Kühlelementen auf einem Bauteil, das eine Unterseite und eine Oberseite aufweist, ausgebildet und weist eine Grundvorrichtung, eine Greifvorrichtung und in Ausgestaltung mindestens eine Auftragevorrichtung für eine Klebstoffverbindung auf. Die Grundvorrichtung weist eine Anzahl Reihen mit Heizelementen auf, wobei die Heizelemente entlang einer jeweiligen Reihe nebeneinander angeordnet sind. Die Greifvorrichtung weist eine entsprechende Anzahl Reihen mit Schienenelementen auf, wobei die Schienenelemente entlang einer jeweiligen Reihe nebeneinander angeordnet sind. Dabei ist eine n-te Reihe mit Heizelementen zu einer n-ten Reihe mit Schienenelementen deckungsgleich, wenn die Greifvorrichtung auf der Grundvorrichtung angeordnet ist. Zum Befestigen der Kühlelemente ist das Bauteil mit seiner Unterseite auf den Heizelementen anzuordnen. Die mindestens eine Auftragevorrichtung ist dazu ausgebildet, die Klebstoffverbindung auf einer der Grundvorrichtung abgewandten Oberseite des Bauteils streifenförmig, d. h. in Streifen und/oder Reihen, die deckungsgleich zu den Reihen sind, entlang der die Heizelemente angeordnet sind, aufzutragen. Außerdem sind die Kühlelemente entlang der Reihen aus Schienenelementen der Greifvorrichtung anzuordnen. Die Schienenelemente sind dazu ausgebildet, die Kühlelemente an der Greifvorrichtung vorübergehend festzuhalten. Die Greifvorrichtung ist dazu ausgebildet, die Kühlelemente auf den und/oder entlang der Streifen der Klebstoffverbindung anzuordnen und gegen die Oberseite des Bauteils zu drücken oder je nach Definition zu pressen. Die Heizelemente sind dazu ausgebildet, die Klebstoffverbindung zwischen den Kühlelementen und der Oberseite des Bauteils entlang der Reihen auf eine Temperatur zu erwärmen bzw. zu erhitzen, die mindestens so groß wie eine Aushärtetemperatur der Klebstoffverbindung ist.

Es ist vorgesehen, dass die Heizelemente Induktionsspulen zum Erwärmen oder je nach Definition zum Erhitzen der Klebstoffverbindung entlang der Reihen aufweisen.

Jedes Schienenelement weist mindestens ein Haltelement und mindestens ein Druckelement auf, wobei das mindestens eine Haltelement, bspw. ein hydraulisches Saugelement, dazu ausgebildet ist, mindestens ein Kühlelement vorübergehend an dem Schienenelement festzuhalten. Jedes Schienenelement weist einen elastisch verformbaren Körper, bspw. aus Gummi, auf. Das mindestens eine Druckelement ist dazu ausgebildet, das Schienenelement mit mindestens einem daran vorübergehend angeordneten Kühlelement gegen die Oberseite des Bauteils zu drücken und die Klebstoffverbindung zwischen dem mindestens einen Kühlelement und der Oberseite homogen zu verteilen. Falls die Kühlelemente magnetisch sein sollten, ist es möglich, dass die Halteelemente Magnete, bspw. Elektromagnete, mit an- und abschaltbaren Magnetfeldern aufweisen, die zumindest so lange aktiviert sind, bis die Kühlelemente auf der als Streifen aufgetragenen Klebstoffverbindung entlang dieser Streifen aufgesetzt und/oder angeordnet sind. Die Magnetfelder sind deaktivierbar, sobald die Induktionsspulen eingeschaltet werden. Dagegen sind nicht-magnetische Kühlelemente mit Saugelementen festzuhalten.

Die Grundvorrichtung und die Greifvorrichtung weisen jeweils Positioniermodule auf, die miteinander verbindbar sind. Dabei sind die miteinander verbundenen Positioniermodule dazu ausgebildet, die Grundvorrichtung und die Greifvorrichtung relativ zueinander zu positionieren und die dabei n-te Reihe aus Heizelementen zu der n-ten Reihe aus Schienenelementen deckungsgleich anzuordnen.

Das System weist mindestens ein Spannmodul auf, das an der Grundvorrichtung und/oder der Greifvorrichtung befestigt, befestigbar und/oder zu befestigten sowie dazu ausgebildet ist, die Grundvorrichtung und die Greifvorrichtung miteinander zu verspannen und somit zu verbinden. Das mindestens eine Spannmodul ist an der Grundvorrichtung und/oder der Greifvorrichtung angeordnet. Die Grundvorrichtung und die Greifvorrichtung sind über mehrere Spannmodule miteinander verbindbar. Die Spannmodule sind dazu ausgebildet, die Grundvorrichtung und die Greifvorrichtung gegeneinander zu drücken. Hierbei ist es möglich, dass zwischen der Oberseite des Bauteils und Außenseiten der Kühlelemente ein definierbarer Abstand für die Klebstoffverbindung einstellbar ist.

Die Grundvorrichtung weist in Ausgestaltung Auflageelemente auf, die auf den Heizelementen angeordnet sind und/oder diese abdecken. Das Bauteil ist auf den Auflageelementen anordenbar. Jeweils ein Heizelement ist durch ein darauf angeordnetes Auflageelement, das eine Wandung des Heizelements bildet, mit dem Bauteil indirekt zu verbinden, wobei ein direkter Kontakt des Heizelements zu dem Bauteil durch das dazwischen befindliche Auflageelement vermieden wird.

Je nach Ausgestaltung des Systems ist es möglich, das Bauteil direkt auf den Heizelementen anzuordnen. Falls das System die Auflageelemente aufweist, ist das Bauteil direkt auf den Auflageelementen und somit indirekt bzw. mittelbar auf den Heizelementen anzuordnen.

Das erfindungsgemäße Verfahren ist zum Befestigen von Kühlelementen auf einem Bauteil vorgesehen, das eine Unterseite und eine Oberseite aufweist. Das Verfahren wird mit einer Ausführungsform des erfindungsgemäßen Systems durchgeführt, das eine Grundvorrichtung, eine Greifvorrichtung und in Ausgestaltung mindestens eine Auftragevorrichtung für eine Klebstoffverbindung aufweist. Die Grundvorrichtung weist eine Anzahl Reihen mit Heizelementen auf, wobei die Heizelemente entlang einer jeweiligen Reihe angeordnet sind. Die Greifvorrichtung weist eine entsprechende Anzahl Reihen mit Schienenelementen auf, wobei die Schienenelemente entlang einer jeweiligen Reihe angeordnet sind. Dabei ist eine n-te Reihe mit Heizelementen zu einer n-ten Reihe Schienenelemente deckungsgleich, wenn die Greifvorrichtung auf der Grundvorrichtung angeordnet wird. Im Rahmen des Verfahrens wird das Bauteil mit seiner Unterseite auf den Heizelementen angeordnet, wobei die Klebstoffverbindung mit der mindestens einen Auftragevorrichtung auf der der Grundvorrichtung abgewandten Oberseite des Bauteils in Streifen und/oder als Streifen, die deckungsgleich zu den Reihen sind, entlang der die Heizelemente angeordnet sind, aufgetragen bzw. aufgebracht wird. Somit werden Streifen des Klebstoffs auf dem Bauteil deckungsgleich zu den Reihen aus Heizelementen aufgetragen. Die Kühlelemente werden entlang der Reihen aus Schienenelementen angeordnet, wobei die Kühlelemente mit den Schienenelementen an der Greifvorrichtung vorübergehend festgehalten werden. Außerdem werden die Kühlelemente mit der Greifvorrichtung entlang der Streifen der Klebstoffverbindung angeordnet und gegen die Oberseite des Bauteils gedrückt. Die Klebstoffverbindung wird zwischen den Kühlelementen und der Oberseite des Bauteils mit den Heizelementen auf eine Temperatur erwärmt oder je nach Definition erhitzt, die mindestens so groß wie eine Aushärtetemperatur der Klebstoffverbindung ist.

Sobald die Klebstoffverbindung entlang der Streifen zwischen den Reihen aus den Kühlelementen und der Oberseite des Bauteils mindestens für eine hierfür vorgesehene Zeitspanne auf die Temperatur, die mindestens so groß wie die Aushärtetemperatur ist, erwärmt worden sind, werden die Heizelemente abgeschaltet. Nun ist es möglich, die Greifvorrichtung anzuheben. Die Kühlelemente sind nun an dem Bauteil befestigt. Es ist denkbar, dass die Grundvorrichtung ein Kühlsystem aufweist, mit dem das Bauteil mit den Kühlelementen abgekühlt wird, sobald die Klebstoffverbindung ausgehärtet ist.

In der Regel wird eine Klebstoffverbindung verwendet, die zwei Klebstoffkomponenten aufweist, die miteinander gemischt werden und gemeinsam aushärten, wenn sie zumindest auf die Aushärtetemperatur erwärmt worden sind.

In Ausgestaltung werden Kühlelemente, bspw. Kühllamellen oder Kühlrippen, auf einem Bauteil, das als Teil eines Gehäuses einer Batterie vorgesehen wird bzw. ist, befestigt.

Die Kühlelemente und die Oberseite des Bauteils mit den dazwischen befindlichen Streifen der Klebstoffverbindung werden zwischen den Schienenelementen und den Heizelementen gegeneinander gedrückt, wobei zwischen den Kühlelementen und dem Bauteil ein minimaler Abstand für die Klebstoffverbindung eingestellt und/oder eingehalten wird.

Das vorgestellte System ist dazu ausgebildet, einen wärmeleitfähigen Klebstoff bzw. die Klebstoffverbindung, der bzw. die zwei Klebstoffkomponenten aufweist, in hierfür vorgesehene Streifen und/oder als hierfür vorgesehene Streifen einwandfrei aufzutragen und anschließend die Kühlelemente auf der Oberseite des Bauteils zu fügen. Dabei wird die Klebstoffverbindung mit einer beispielsweise als Kleberaupe ausgebildeten Auftragevorrichtung hinsichtlich einer Mittellinie eines vorgesehenen Streifens aus der Klebstoffverbindung von innen nach außen gedrückt. Falls die Klebstoffverbindung zwei Klebstoffkomponenten aufweist, ist es möglich, diese beiden Klebstoffkomponenten mit der mindestens einen Auftragevorrichtung zu mischen und gemeinsam auf der Oberseite des Bauteils aufzutragen.

Unabhängig von möglichen Ausführungsformen ist vorgesehen, dass die Klebstoffverbindung auf der Oberseite des Bauteils ohne Lufteinschlüsse aufgetragen wird. Außerdem wird für die Klebestoffverbindung zwischen der Oberseite des Bauteils und den Außenseiten der Kühlelemente über den definierbaren Abstand ein gleichmäßiger Klebespalt eingestellt. Danach wird die Klebstoffverbindung mit den Heizelementen, die in die Grundvorrichtung integriert sind, erwärmt bzw. erhitzt, wobei ein Härtevorgang für die Klebestoffverbindung ausgelöst wird. Dabei härtet ein Streifen aus der Klebstoffverbindung bzw. die Klebstoffverbindung in ihrer Position innerhalb des Klebespalts entlang eines jeweils vorgesehenen Streifens, der sowohl zu einer jeweiligen Reihe aus Heizelementen und einer jeweiligen Reihe aus Schienenelementen deckungsgleich ist, aus. Üblicherweise sind mit dem System bei Durchführung einer Ausführungsform des Verfahrens auf einem Gehäuse einer Batterie Kühlelemente zu verkleben.

Das System ermöglicht das Fügen der Kühlelemente auf dem Bauteil, bspw. dem Gehäuse, bei gleichzeitigem Verpressen der Klebstoffverbindung bzw. des Klebstoffs und gleichzeitigem und/oder anschließendem Erhitzen der Klebstoffverbindung zwischen den Kühlelementen und der Oberseite des Bauteils, um die Klebstoffverbindung, die üblicherweise aus zwei Klebstoffkomponenten besteht, porenfrei mit einem gleichmäßigen Klebespalt einer Höhe von ca. 0,5 mm, bspw. 0,5 mm - 0,3 mm oder 0,5 mm + 0,5 mm auszuhärten. Der vorgesehene Klebespalt und dessen Höhe werden u. a. durch Einstellen des Abstands zwischen den Heizelementen und den Spannmodulen eingestellt.

Bei dem vorgestellten System bildet die Grundvorrichtung ein Unterteil, auf dem das Bauteil anzuordnen ist, wobei die Heizelemente das Bauteil aufnehmen. Außerdem bildet die Grundvorrichtung eine Gegenlage zum Verdrücken der Klebstoffverbindung. Die bspw. als Induktionsspulen ausgebildeten Heizelemente der Grundvorrichtung umfassen viereckige, bspw. rechteckige, quadratische und/oder als Vierkant geformte Kupferleitungen bzw. Kupferrohre, die auch dazu ausgebildet sind, die Heizelemente abzukühlen, sobald die Klebstoffverbindung ausgehärtet ist. Die Kühlelemente werden durch die Greifvorrichtung, die auch als Oberteil des Systems ausgebildet und/oder zu bezeichnen ist, mit Saugern bzw. Saugelementen der Schienenelemente aufgenommen. Die Spannmodule bzw. Spanneinheiten sowie die Positioniermodule, die jeweils an Seiten der Grundvorrichtung und der Greifvorrichtung angeordnet sind, ermöglichen eine exakte Positionierung der Grundvorrichtung und der Greifvorrichtung übereinander, wobei sich ergibt, dass eine n-te Reihe Schienenelemente und eine n-te Reihe Heizelemente zueinander und/oder relativ zueinander deckungsgleich anordenbar sind.

In Ausgestaltung ist vorgesehen, dass Oberflächen der Heizelemente flächige Auflagen bilden und/oder die Auflageelemente aufweisen, mit denen eine nachträgliche maßliche Anpassung einer Höhe bzw. Breite des Klebespalts für die Klebstoffverbindung möglich ist.

Mit dem System und dem Verfahren ist es bspw. möglich, an einem Gehäuse einer Batterie für ein Fahrzeug Kühlelemente anzuordnen, wobei diese Batterie dazu geeignet ist, elektrische Energie zum Antreiben des Fahrzeugs zu speichern, wobei in die Batterie elektrische Energie ladbar und auch wieder entladbar ist. Über die Kühlelemente an dem Gehäuse der Batterie ist für die Batterie ein außenliegendes Kühlsystem bereitstellbar, mit dem die Batterie gegen Überhitzung und somit gegen Zerstörung geschützt wird.

Es ist bspw. vorgesehen, dass die Schienenelemente elastische, in der Regel hartelastische Druckelemente aufweisen, mit denen die Kühlelemente in Richtung der Oberseite des Bauteils unter Beibehaltung des für die Klebstoffverbindung vorgesehenen Klebespalts zu drücken sind.

Im Rahmen des Verfahrens ist es möglich, einen Druck auf die Klebstoffverbindung entlang des Streifens innerhalb des Klebespalts unter Berücksichtigung eines hier vorgesehenen Istwerts an einen jeweils vorgesehenen Sollwert anzupassen und dabei den Druck u. a. aufzubauen. Es ist ebenfalls vorgesehen, die Klebstoffverbindung innerhalb des Klebespalts durch die Heizelemente üblicherweise induktiv zu erwärmen, wobei es ebenfalls möglich ist, einen jeweils aktuellen Istwert der Temperatur an einen hierfür vorgesehenen Sollwert anzupassen, wobei der Sollwert in der Regel mindestens so groß wie die Aushärtetemperatur der Klebstoffverbindung ist. Es ist jedoch auch möglich, dass ein Sollwert des Drucks und ein Sollwert der Temperatur miteinander korreliert und/oder aufeinander abgestimmt werden. Hierdurch ist es bspw. möglich, die Klebstoffverbindung in einer vorgesehenen Fertigungsdauer und somit einer entsprechenden Zeitspanne auszuhärten. Der Klebespalt weist eine Höhe bzw. Breite von einem Bruchteil eines Millimeters bis zu ca. einem Millimeter auf.

Weiterhin ist es möglich, dass auf jedem Heizelement eine thermisch leitfähige sowie mechanisch stabile, bspw. hartelastisch verformbare Wandung bzw. ein entsprechendes Gefache, als Auflageelement angeordnet ist, auf der bzw. dem die Unterseite des Bauteils anzuordnen ist. Falls ein jeweiliges Heizelement als Induktionsspule ausgebildet ist und/oder eine solche aufweist, ist es möglich, die Unterseite des Bauteils von einer jeweiligen Induktionsspule mit dem Auflageelement zu beabstanden. Mit einer jeweiligen Induktionsspule, die entlang einer jeweiligen Reihe von Heizelementen angeordnet ist, werden induktiv Wirbelströme erzeugt, mit denen metallische Module, bspw. das Bauteil und/oder die Kühlelemente, erwärmt werden, wodurch wiederum die Klebstoffverbindung zwischen den Kühlelementen und dem Bauteil erwärmt wird.

Bei einer möglichen Ausführung des Verfahrens wird die Klebstoffverbindung zumindest über das Bauteil und/oder die Kühlelemente von den Heizelementen mittelbar erwärmt, wobei eine Temperatur innerhalb einer vorgesehenen definierbaren Zeitspanne auf einen Sollwert, der bspw. mindestens so groß wie die Aushärtetemperatur ist, erwärmt wird. Weiterhin wird diese Temperatur während einer zweiten Zeitspanne auf dem vorgesehenen Sollwert gehalten. Dabei entspricht der Sollwert für die Temperatur beispielsweise 80 °C. Die erste Zeitspanne bzw. eine Aufheizphase, während der die Temperatur der Klebstoffverbindung auf den Sollwert erwärmt wird, dauert bspw. 40 Sekunden an. Die zweite Zeitspanne bzw. eine Haltephase, während der die Temperatur auf dem Sollwert gehalten wird, dauert bspw. 200 Sekunden an.

Nach Abschalten der Induktionsspulen der Heizelemente kühlen das Bauteil und die Kühlelemente vergleichsweise schnell ab. Es ist jedoch auch möglich, dass in der Grundvorrichtung ein Kühlsystem zum Beeinflussen der Temperatur der Klebstoffverbindung während des Verfahrens angeordnet ist. Dieses Kühlsystem umfasst einen Rückkühler, wobei als Kühlmittel bspw. Wasser verwendet wird. Außerdem sind eine thermostatische Rohrwasserregulierung, ein Vorratsbehälter, eine interne Druckpumpe für das Kühlmittel, sowie Sensoren zum Überwachen eines Fühlstands der Temperatur, eines Durchflusses und eines Bedarfs an Wasser als Kühlmedium vorgesehen. Außerdem ist es möglich, einen Druck des Kühlmittels auf mindestens 3 bar, maximal 10 bar einzustellen. Eine Temperatur des Kühlmittels beträgt bspw. 10 bis 30 °C.

Bei einer Umsetzung des Verfahrens wird zunächst die Klebstoffverbindung in Form von Streifen deckungsgleich zu den Reihen aus Heizelementen in einer definierten Zeitspanne auf der Oberseite des Bauteils aufgetragen bzw. aufgebracht. Danach werden ebenfalls innerhalb einer definierbaren Zeitspanne über die Schienenelemente der Greifvorrichtung ebenfalls entlang der vorgesehenen Reihen, die zu den Streifen der aufgetragenen Klebstoffverbindung deckungsgleich sind, die Kühlelemente angeordnet. Während des Verfahrens wird lediglich die Klebstoffverbindung entlang eines jeweils vorgesehenen Streifens, der zu einer jeweiligen Reihe an Heizelementen deckungsgleich ist, gezielt aufgewärmt.

Oberflächen der Spannmodule sind bspw. aus Hartgummi, Polyvinylchlorid (PVC) oder Schaumstoff gebildet. Dabei sind die Schienenelemente vergleichsweise hart, aber dennoch geringfügig elastisch nachgiebig.

Weiterhin ist vorgesehen, dass Außenseiten der Kühlelemente über die Klebstoffverbindung flächig als Streifen bzw. entlang der hierfür vorgesehenen Streifen auf der Oberseite des Bauteils verklebt werden.

In Ausgestaltung wird die Klebstoffverbindung entlang eines jeweils vorgesehenen Streifens mit einer als Kühlraupe ausgebildeten Auftragevorrichtung auf der Oberseite des Bauteils aufgetragen.

In möglicher Ausgestaltung sind die Heizelemente in Auflageelementen und/oder unterhalb von Auflageelementen angeordnet, auf denen das Bauteil angeordnet wird. Dabei sind die Auflageelemente entsprechend der darin integrierten Heizelemente ebenfalls entlang von Reihen angeordnet, wobei die Auflageelemente sowie die Heizelemente einer n-ten Reihe zu einer n-ten Reihe der Schienenelemente deckungsgleich sind, wenn die Greifvorrichtung auf der Grundvorrichtung angeordnet wird bzw. ist. Entsprechend ist die Klebstoffverbindung entlang eines n-ten Streifens aufzutragen, der zu der n-ten Reihe aus Heizelementen und ggf. Auflageelementen deckungsgleich ist.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt in schematischer Darstellung ein Beispiel einer Grundvorrichtung als Komponente einer Ausführungsform des erfindungsgemäßen Systems aus unterschiedlichen Perspektiven in schematischer Darstellung.
Figur 2 zeigt ein Beispiel für eine Greifvorrichtung als Komponente der Ausführungsform des erfindungsgemäßen Systems aus verschiedenen Perspektiven in schematischer Darstellung.
Figur 3 verdeutlicht in schematischer Darstellung zwei Schritte einer Ausführungsform des erfindungsgemäßen Verfahrens, die mit den voranstehend vorgestellten Komponenten des erfindungsgemäßen Systems durchführbar ist.

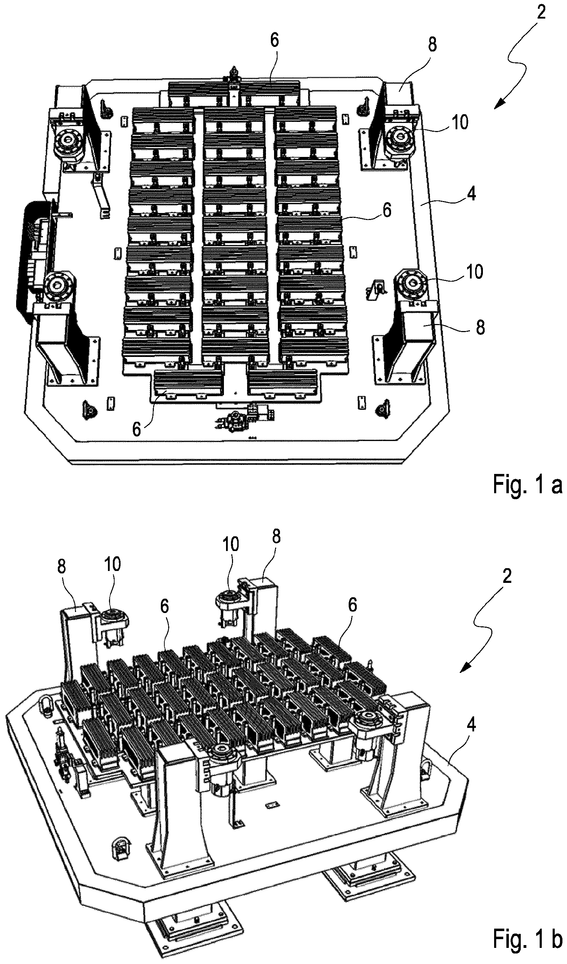

Die Figuren 1a und 1b zeigen die Grundvorrichtung 2 als Unterteil der Ausführungsform des erfindungsgemäßen Systems aus verschiedenen Perspektiven. Dabei umfasst die Grundvorrichtung 2 zumindest eine Platte 4, entlang der mehrere Reihen an Auflageelementen 6 angeordnet sind. Hierbei umfassen zwei äußere Reihen jeweils zwei Auflageelemente 6, die entlang einer jeweiligen Reihe hintereinander angeordnet sind. Dazwischen sind auf der Platte 4 neun Reihen an Auflageelementen 6 angeordnet, wobei innerhalb einer jeweiligen Reihe entlang dieser Reihe nebeneinander drei Auflageelemente 6 angeordnet sind. Außerdem ist vorgesehen, dass jedes Auflageelement 6 ein als Induktionsspule und/oder Induktionsschleife ausgebildetes Heizelement abdeckt, wobei ein jeweiliges Auflageelement 6 als eine Abdeckung bzw. Wandung eines jeweiligen Heizelements ausgebildet ist. Demnach sind die Heizelemente in den Figuren durch Wandungen der Auflageelemente 6 verdeckt und nicht zu erkennen. Weiterhin ist vorgesehen, dass die Heizelemente innerhalb einer jeweiligen Reihe aus Auflageelementen 6 ebenfalls nebeneinander und/oder hintereinander angeordnet sind. Dabei umschließt jeweils ein Auflageelement 6 ein Heizelement, in der Regel dessen Oberseite, zumindest teilweise. Je nach Definition ist ein Auflageelement 6 als Gehäuse eines Heizelement ausgebildet und/oder zu bezeichnen.

Außerdem sind auf der Platte 4 vier Haltestäbe 8 angeordnet, wobei an einem jeweiligen Haltestab 8 ein primäres Positioniermodul 10 angeordnet ist. Es ist vorgesehen, dass jeweils zwei Haltestäbe 8 und zwei primäre Positioniermodule 10 entlang einer Linie angeordnet sind, wobei die Reihen aus den Auflageelementen 6 und den Heizelementen zwischen diesen beiden Linien angeordnet sind.

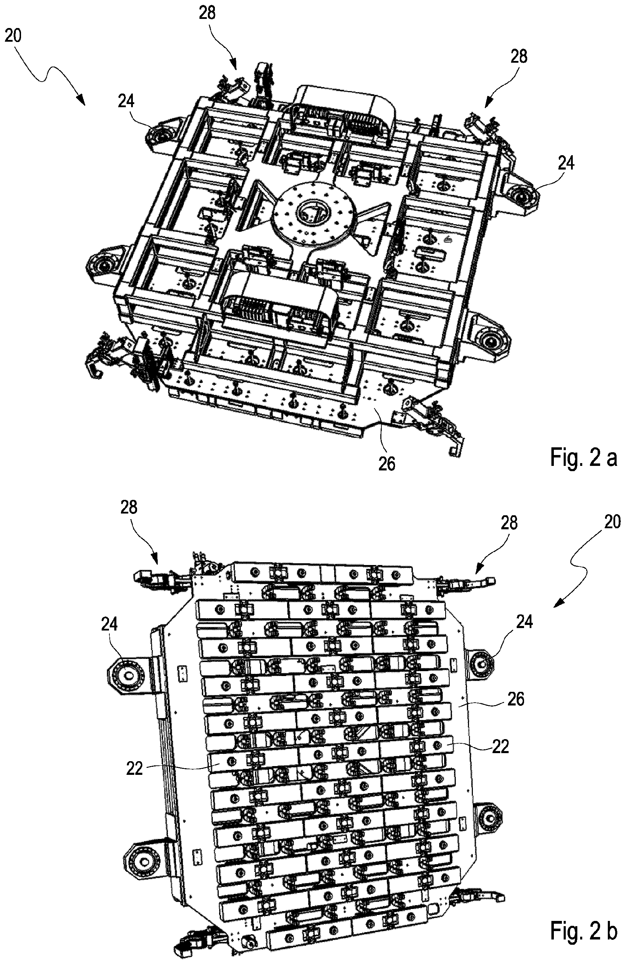

Figur 2a zeigt die Greifvorrichtung 20 als Oberteil des Systems von oben, wohingegen Figur 2b die Greifvorrichtung 20 von unten zeigt. Auf der Unterseite der Greifvorrichtung 20 sind hier elf Reihen aus Schienenelementen 22 angeordnet. Dabei umfassen neun derartige Reihen jeweils drei entlang einer jeweiligen Reihe hintereinander angeordnete Schienenelemente 22. Außerdem sind zwei weitere Reihen mit jeweils zwei Schienenelementen 22 vorgesehen, die die anderen Reihen begrenzen. Allerdings sind auch die beiden Schienenelemente 22 einer jeweiligen Reihe entlang der Reihe hintereinander und/oder nebeneinander angeordnet.

Außerdem zeigen die Figuren 2a und 2b sekundäre Positioniermodule 24, die hier an zwei Außenseiten eines Tragkörpers 26 angeordnet sind, auf dem wiederum die Reihen aus Schienenelementen 22 angeordnet sind. Außerdem sind an Ecken des Tragkörpers 26 vier Spannmodule 28 angeordnet.

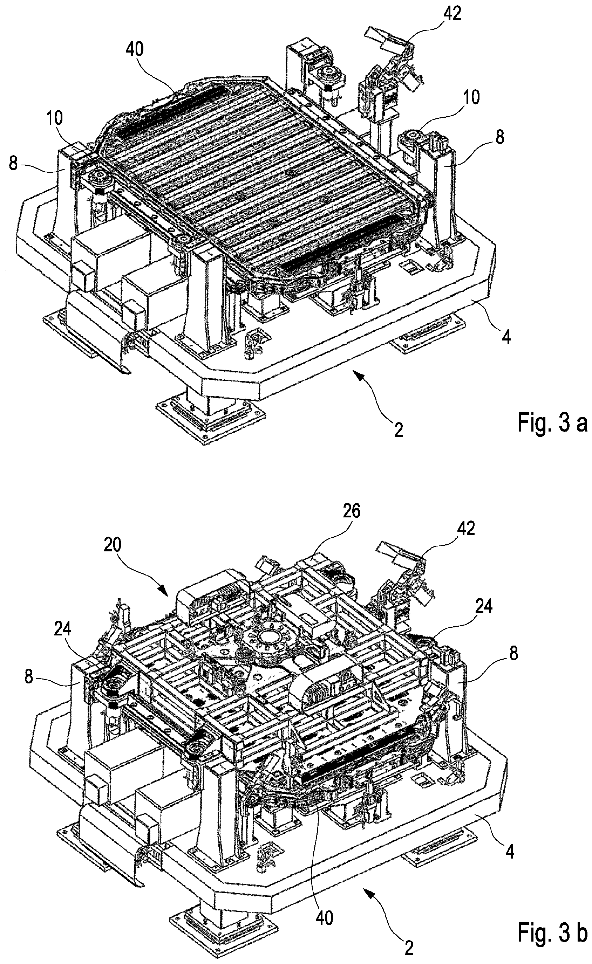

Wie die Figuren 3a und 3b zeigen, ist bei Durchführung der Ausführungsform des Verfahrens auf den Auflageelementen 6 und somit auch auf den Heizelementen der Grundvorrichtung 2 ein Bauteil 40 anordenbar, das hier als Teil eines Gehäuses für eine Batterie vorgesehen ist (Figur 3a). Außerdem wird im Rahmen des Verfahrens auf das Bauteil 40 und somit auch auf die Grundvorrichtung 2 die Greifvorrichtung 20 angeordnet. Hierbei ist vorgesehen, dass die primären Positioniermodule 10 der Grundvorrichtung 2 auf den sekundären Positioniermodulen 24 des Tragkörpers 26 angeordnet werden, wobei die Grundvorrichtung 2 und die Greifvorrichtung 20 über die Positioniermodule 10, 24 relativ zueinander positioniert sowie miteinander verbunden werden.

Dabei ist auch vorgesehen, dass jeweils eine Reihe aus Auflageelementen 6 und somit auch von darin integrierten Heizmodulen der Grundvorrichtung 2 deckungsgleich bzw. kongruent mit einer jeweiligen Reihe an Spannmodulen 22 der Greifvorrichtung 20 angeordnet sind.

Bei der Ausführungsform des Verfahrens wird zunächst das Bauteil 40 mit seiner Unterseite auf den Reihen aus Auflageelementen 6 und somit auch auf den Reihen aus Heizelementen angeordnet. Danach wird mit mindestens einer Auftragevorrichtung 42 auf der Oberseite des Bauteils 40 entlang eines Streifens und/oder als Streifen, der deckungsgleich zu einer Reihe aus Auflageelementen 6 sowie Heizelementen der Grundvorrichtung 2 ist, eine Klebstoffverbindung, die zwei Klebstoffkomponenten aufweist, aufgetragen. Außerdem ist vorgesehen, an Halteelementen der Schienenelemente 22 jeweils entlang einer Reihe dieser Schienenelemente 22 Kühlelemente, bspw. Kühllamellen, anzuordnen und diese über Halteelemente der Schienenelemente 22 an diesen vorübergehend zu befestigen. Dabei ist vorgesehen, dass eine jeweilige Reihe an Kühlelementen deckungsgleich zu einer jeweiligen Reihe an Schienenelementen 22 ist. Danach wird die Greifvorrichtung 20 auf der Grundvorrichtung 2 und somit auch auf dem Bauteil 40 angeordnet. Dabei ist ebenfalls vorgesehen, dass jeweils ein Streifen der Klebstoffverbindung deckungsgleich zu einer Reihe aus Kühlelementen ist. Dabei wird jeweils eine Reihe aus Kühlelementen deckungsgleich auf jeweils einem Streifen der Klebstoffverbindung angeordnet.

Dabei wird über die Positioniermodule 10, 24 zwischen einer Außenseite eines jeweiligen Kühlelements und der Oberseite des Bauteils 40 ein minimaler Abstand für einen Klebespalt der Klebstoffverbindung eingehalten. Sobald bzw. nachdem die Reihen aus Kühlelementen auf den Streifen der Klebstoffverbindung aufgetragen sind, werden die Heizelemente der Auflageelemente 6, die als Induktionsspulen ausgebildet sind, aktiviert, wobei von den Heizelementen Wirbelströme erzeugt werden, durch die zumindest das Bauteil 40 und ggf. auch die Kühlelemente entlang eines jeweiligen Streifens aus der Klebstoffverbindung erwärmt werden. Weiterhin ist vorgesehen, die Klebstoffverbindung zwischen dem Bauteil 40 und den Kühlelementen für eine vorgesehene Zeitspanne auf eine Temperatur zu erwärmen, die mindestens so groß wie die Aushärtetemperatur der Klebstoffverbindung ist. Sobald die Klebstoffverbindung ausgehärtet ist, werden die Kühlelemente von den Halteelementen der Schienenelemente 22 gelöst und die Greifvorrichtung 20 von dem Bauteil 40 angehoben. Die Kühlelemente sind somit auf der Oberseite des Bauteils 40 befestigt.

## Patentansprüche

1. System zum Befestigen von Kühlelementen auf einem Bauteil (40), das eine Unterseite und eine Oberseite aufweist, wobei das System eine Grundvorrichtung (2) und eine Greifvorrichtung (20) aufweist, wobei die Grundvorrichtung (2) eine Anzahl Reihen mit Heizelementen aufweist, wobei die Heizelemente entlang einer jeweiligen Reihe angeordnet sind, wobei die Greifvorrichtung (20) eine entsprechende Anzahl Reihen mit Schienenelementen (22) aufweist, wobei die Schienenelemente (22) entlang einer jeweiligen Reihe angeordnet sind, wobei eine n-te Reihe mit Heizelementen zu einer n-ten Reihe Schienenelemente (22) deckungsgleich ist, wenn die Greifvorrichtung (20) auf der Grundvorrichtung (2) angeordnet ist, wobei das Bauteil (40) mit seiner Unterseite auf den Heizelementen anzuordnen ist, wobei eine Klebstoffverbindung auf einer der Grundvorrichtung (2) abgewandten Oberseite des Bauteils (40) in Streifen, die deckungsgleich zu den Reihen sind, entlang der die Heizelemente angeordnet sind, aufzutragen ist, wobei die Kühlelemente entlang der Reihen aus Schienenelementen (22) anzuordnen sind, wobei die Schienenelemente (22) dazu ausgebildet sind, die Kühlelemente an der Greifvorrichtung (20) vorübergehend festzuhalten, wobei die Greifvorrichtung (20) dazu ausgebildet ist, die Kühlelemente auf den Streifen der Klebstoffverbindung anzuordnen und gegen die Oberseite des Bauteils (40) zu drücken, wobei die Heizelemente dazu ausgebildet sind, die Klebstoffverbindung zwischen den Kühlelementen und der Oberseite des Bauteils (40) auf eine Temperatur zu erwärmen, die mindestens so groß wie eine Aushärtetemperatur der Klebstoffverbindung ist.

2. System nach Anspruch 1, bei dem die Heizelemente Induktionsspulen aufweisen.

3. System nach Anspruch 1 oder 2, bei dem jedes Schienenelement (22) mindestens ein Haltelement und mindestens ein Druckelement aufweist, wobei das mindestens eine Haltelement dazu ausgebildet ist, mindestens ein Kühlelement vorübergehend an dem Schienenelement (22) festzuhalten, wobei das mindestens eine Druckelement dazu ausgebildet ist, das Schienenelement (22) mit mindestens einem daran vorübergehend angeordneten Kühlelement gegen die Oberseite des Bauteils (40) zu drücken und die Klebstoffverbindung zwischen dem mindestens einen Kühlelement und der Oberseite homogen zu verteilen.

4. System nach einem der voranstehenden Ansprüche, bei dem die Grundvorrichtung (2) und die Greifvorrichtung (20) jeweils Positioniermodule (10, 24) aufweisen, die miteinander verbindbar sind, wobei die miteinander verbundenen Positioniermodule (10, 24) dazu ausgebildet sind, die Grundvorrichtung (2) und die Greifvorrichtung (20) relativ zueinander zu positionieren und die n-te Reihe aus Heizelementen zu der n-ten Reihe aus Schienenelementen (22) deckungsgleich anzuordnen.

5. System nach einem der voranstehenden Ansprüche, das mindestens ein Spannmodul (28) aufweist, das dazu ausgebildet ist, die Grundvorrichtung (2) und die Greifvorrichtung (20) miteinander zu verspannen.

6. System nach einem der voranstehenden Ansprüche, bei dem die Grundvorrichtung (2) Auflageelemente (6) aufweist, die auf den Heizelementen angeordnet sind, wobei das Bauteil (40) auf den Auflageelementen (6) anordenbar ist.

7. Verfahren zum Befestigen von Kühlelementen auf einem Bauteil (40), das eine Unterseite und eine Oberseite aufweist, wobei das Verfahren mit einem System durchgeführt wird, das eine Grundvorrichtung (2) und eine Greifvorrichtung (20) aufweist, wobei die Grundvorrichtung (2) eine Anzahl Reihen mit Heizelementen aufweist, wobei die Heizelemente entlang einer jeweiligen Reihe angeordnet sind, wobei die Greifvorrichtung (20) eine entsprechende Anzahl Reihen mit Schienenelementen (22) aufweist, wobei die Schienenelemente (22) entlang einer jeweiligen Reihe angeordnet sind, wobei eine n-te Reihe mit Heizelementen zu einer n-ten Reihe Schienenelemente (22) deckungsgleich ist, wenn die Greifvorrichtung (20) auf der Grundvorrichtung (2) angeordnet wird, wobei das Bauteil (40) mit seiner Unterseite auf den Heizelementen angeordnet wird, wobei auf einer der Grundvorrichtung (2) abgewandten Oberseite des Bauteils (40) eine Klebstoffverbindung in Streifen, die deckungsgleich zu den Reihen sind, entlang der die Heizelemente angeordnet sind, aufgetragen wird, wobei die Kühlelemente entlang der Reihen aus Schienenelementen (22) angeordnet werden, wobei die Kühlelemente mit den Schienenelementen (22) an der Greifvorrichtung (20) vorübergehend festgehalten werden, wobei die Kühlelemente mit der Greifvorrichtung (20) auf den Streifen der Klebstoffverbindung angeordnet und gegen die Oberseite des Bauteils (40) gedrückt werden, wobei die Klebstoffverbindung zwischen den Kühlelementen und der Oberseite des Bauteils (40) mit den Heizelementen auf eine Temperatur erwärmt wird, die mindestens so groß wie eine Aushärtetemperatur der Klebstoffverbindung ist.

8. Verfahren nach Anspruch 7, bei dem eine Klebstoffverbindung verwendet wird, die zwei Klebstoffkomponenten aufweist, die miteinander gemischt werden.

9. Verfahren nach Anspruch 7 und 8, bei dem Kühlelemente auf einem Bauteil (40), das als Teil eines Gehäuses einer Batterie vorgesehen wird, befestigt werden.

10. Verfahren nach einem der Ansprüche 7 bis 9, bei dem die Kühlelemente und die Oberseite des Bauteils (40) mit der dazwischen befindlichen Klebstoffverbindung zwischen den Schienenelementen (22) und den Heizelementen unter Einhaltung eines Klebespalts zwischen der Oberseite und jeweils einem Kühlelement gegeneinander gedrückt werden.

## Claims

1. A system for fastening cooling elements on a component (40) having a bottom side and a top side, wherein the system has a base apparatus (2) and a gripping apparatus (20), wherein the base apparatus (2) has a number of rows with heating elements, wherein the heating elements are arranged along a respective row, wherein the gripping apparatus (20) has a corresponding number of rows with rail elements (22), wherein the rail elements (22) are arranged along a respective row, wherein an n-th row with heating elements is congruent with an n-th row of rail elements (22) when the gripping apparatus (20) is arranged on the base apparatus (2), wherein the component (40) is to be arranged with its bottom side on the heating elements, wherein an adhesive compound is to be applied to a top side of the component (40), which top side is averted from the base apparatus (2), in strips which are congruent to the rows along which the heating elements are arranged, wherein the cooling elements are to be arranged along the rows of rail elements (22), wherein the rail elements (22) are designed to temporarily firmly hold the cooling elements on the gripping apparatus (20), wherein the gripping apparatus (20) is designed to arrange the cooling elements on the strips of the adhesive compound and to press said cooling elements against the top side of the component (40), wherein the heating elements are designed to heat up the adhesive compound between the cooling elements and the top side of the component (40) to a temperature which is at least as high as a curing temperature of the adhesive compound.

2. The system according to claim 1, in which the heating elements have induction coils.

3. The system according to claim 1 or 2, in which each rail element (22) has at least one holding element and at least one pressing element, wherein the at least one holding element is designed to temporarily firmly hold at least one cooling element on the rail element (22), wherein the at least one pressing element is designed to press the rail element (22) with at least one cooling element temporarily arranged thereon against the top side of the component (40) and to homogeneously distribute the adhesive compound between the at least one cooling element and the top side.

4. The system according to any of the preceding claims, in which the base apparatus (2) and the gripping apparatus (20) each have positioning modules (10, 24) which are interconnectable, wherein the interconnected positioning modules (10, 24) are designed to position the base apparatus (2) and the gripping apparatus (20) relative to each other and to arrange the n-th row of heating elements congruent with the n-th row of rail elements (22).

5. The system according to any of the preceding claims, having at least one clamping module (28) designed to clamp the base apparatus (2) and the gripping apparatus (20) to each other.

6. The system according to any of the preceding claims, in which the base apparatus (2) has support elements (6) arranged on the heating elements, wherein the component (40) is arrangeable on the support elements (6).

7. A method for fastening cooling elements on a component (40) having a bottom side and a top side, wherein the method is carried out with a system which has a base apparatus (2) and a gripping apparatus (20), wherein the base apparatus (2) has a number of rows with heating elements, wherein the heating elements are arranged along a respective row, wherein the gripping apparatus (20) has a corresponding number of rows with rail elements (22), wherein the rail elements (22) are arranged along a respective row, wherein an n-th row with heating elements is congruent with an n-th row of rail elements (22) when the gripping apparatus (20) is arranged on the base apparatus (2), wherein the component (40) is arranged with its bottom side on the heating elements, wherein an adhesive compound is applied to a top side of the component (40), which top side is averted from the base apparatus (2), in strips which are congruent to the rows along which the heating elements are arranged, wherein the cooling elements are arranged along the rows of rail elements (22), wherein the cooling elements with the rail elements (22) are temporarily firmly held on the gripping apparatus (20), wherein the cooling elements are arranged with the gripping apparatus (20) on the strips of the adhesive compound and pressed against the top side of the component (40), wherein the adhesive compound between the cooling elements and the top side of the component (40) is heated with the heating elements to a temperature which is at least as high as a curing temperature of the adhesive compound.

8. The method according to claim 7, in which an adhesive compound is used which has two adhesive components that are mixed together.

9. The method according to claims 7 and 8, in which cooling elements are fastened on a component (40) which is provided as part of a battery housing.

10. The method according to any of claims 7 to 9, in which the cooling elements and the top side of the component (40), with the adhesive compound between them, are pressed against each other between the rail elements (22) and the heating elements while maintaining an adhesive gap between the top side and respectively one cooling element.

## Revendications

1. Système de fixation d'éléments de refroidissement sur un composant (40) présentant une surface inférieure et une surface supérieure, le système étant doté d'un dispositif de base (2) et d'un dispositif de préhension (20), le dispositif de base (2) présentant un certain nombre de rangées d'éléments chauffants, les éléments chauffants étant disposés le long d'une rangée respective, le dispositif de préhension (20) présentant un nombre correspondant de rangées d'éléments de rail (22), les éléments de rail (22) étant disposés le long d'une rangée respective, une n-ième rangée d'éléments chauffants coïncidant avec une n-ième rangée d'éléments de rail (22) lorsque le dispositif de préhension (20) est placé sur le dispositif de base (2), la face inférieure du composant (40) devant être placée sur les éléments chauffants, un adhésif devant être appliqué sur une face supérieure du composant (40), opposée au dispositif de base (2), en bandes qui coïncident avec les rangées le long desquelles les éléments chauffants sont disposés, les éléments de refroidissement devant être disposés le long des rangées d'éléments de rail (22), les éléments de rail (22) étant conçus pour retenir temporairement les éléments de refroidissement sur le dispositif de préhension (20), le dispositif de préhension (20) étant conçu pour placer les éléments de refroidissement sur les bandes de l'adhésif et pour les presser contre la face supérieure du composant (40), les éléments chauffants étant conçus pour chauffer l'adhésif entre les éléments de refroidissement et la face supérieure du composant (40) à une température au moins aussi élevée qu'une température de durcissement de l'adhésif.

2. Système selon la revendication 1, dans lequel les éléments chauffants présentent des bobines d'induction.

3. Système selon la revendication 1 ou 2, dans lequel chaque élément de rail (22) présente au moins un élément de retenue et au moins un élément de pression, l'au moins un élément de retenue étant conçu pour retenir temporairement au moins un élément de refroidissement sur l'élément de rail (22), l'au moins un élément de pression étant conçu pour presser l'élément de rail (22) avec au moins un élément de refroidissement disposé temporairement sur celui-ci contre la face supérieure du composant (40) et pour répartir de manière homogène l'adhésif entre l'au moins un élément de refroidissement et la face supérieure.

4. Système selon l'une des revendications précédentes, dans lequel le dispositif de base (2) et le dispositif de préhension (20) présentent chacun des modules de positionnement (10, 24) pouvant être interconnectés, les modules de positionnement (10, 24) interconnectés étant conçus pour positionner le dispositif de base (2) et le dispositif de préhension (20) l'un par rapport à l'autre et pour faire coïncider la n-ième rangée d'éléments chauffants avec la n-ième rangée d'éléments de rail (22).

5. Système selon l'une des revendications précédentes, présentant au moins un module de serrage (28) conçu pour serrer ensemble le dispositif de base (2) et le dispositif de préhension (20).

6. Système selon l'une des revendications précédentes, dans lequel le dispositif de base (2) présente des éléments d'appui (6) disposés sur les éléments chauffants, le composant (40) pouvant être disposé sur les éléments d'appui (6).

7. Procédé de fixation d'éléments de refroidissement sur un composant (40) présentant une surface inférieure et une surface supérieure, le procédé étant réalisé avec un système doté d'un dispositif de base (2) et d'un dispositif de préhension (20), le dispositif de base (2) présentant un certain nombre de rangées d'éléments chauffants, les éléments chauffants étant disposés le long d'une rangée respective, le dispositif de préhension (20) présentant un nombre correspondant de rangées d'éléments de rail (22), les éléments de rail (22) étant disposés le long d'une rangée respective, une n-ième rangée d'éléments chauffants coïncidant avec une n-ième rangée d'éléments de rail (22) lorsque le dispositif de préhension (20) est placé sur le dispositif de base (2), la face inférieure du composant (40) étant placée sur les éléments chauffants, un adhésif étant appliqué sur une face supérieure du composant (40), opposée au dispositif de base (2), en bandes qui coïncident avec les rangées le long desquelles les éléments chauffants sont disposés, les éléments de refroidissement étant disposés le long des rangées d'éléments de rail (22), les éléments de refroidissement étant retenus temporairement sur le dispositif de préhension (20) à l'aide des éléments de rail (22), les éléments de refroidissement étant placés sur les bandes de l'adhésif à l'aide du dispositif de préhension (20) et pressés contre la face supérieure du composant (40), l'adhésif se trouvant entre les éléments de refroidissement et la face supérieure du composant (40) étant chauffé à l'aide des éléments chauffants à une température au moins aussi élevée qu'une température de durcissement de l'adhésif.

8. Procédé selon la revendication 7, pour lequel l'adhésif utilisé comprend deux composants adhésifs mélangés ensemble.

9. Procédé selon les revendications 7 et 8, pour lequel des éléments de refroidissement sont fixés sur un composant (40) faisant partie d'un boîtier d'une batterie.

10. Procédé selon l'une des revendications 7 à 9, dans lequel les éléments de refroidissement et la face supérieure du composant (40) sont pressés ensemble, avec l'adhésif interposé, entre les éléments de rail (22) et les éléments chauffants, tout en laissant un interstice de collage entre la face supérieure et un élément de refroidissement respectif.
